Europäisches Patentamt

European Patent Office

Office européen des brevets

(19)

(11) Publication number: **0 018 714**
**B1**

(12) # EUROPEAN PATENT SPECIFICATION

(45) Date of publication of patent specification: **21.09.83**

(51) Int. Cl.³: **B 29 C 1/02, A 43 D 65/02**

(21) Application number: **80300855.6**

(22) Date of filing: **19.03.80**

(54) **Method of manufacturing moulds for the soles of footwear and a mould produced by this method.**

(30) Priority: **21.03.79 FR 7907190**

(43) Date of publication of application:
**12.11.80 Bulletin 80/23**

(45) Publication of the grant of the patent:
**21.09.83 Bulletin 83/38**

(84) Designated Contracting States:
**BE CH DE FR GB IT LU NL**

(56) References cited:
**DE - A - 2 224 231**
**GB - A - 1 226 957**
**US - A - 3 547 602**

(73) Proprietor: **THE BRITISH BATA SHOE COMPANY LIMITED**
**East Tilbury**
**Grays Essex, RM18 8RL (GB)**

(72) Inventor: **Adam, Jean-Claude**
**c/o Les Manufactures de Saint-Marcel**
**Saint-Marcel (Eure) (FR)**

(74) Representative: **Maguire, Peter Albert et al,**
**Fitzpatricks Kern House 61/62 Lincoln's Inn Fields**
**London WC2B 6EX (GB)**

Courier Press, Leamington Spa, England

Method of manufacturing moulds for the soles of footwear
and a mould produced by this method

The invention relates to the manufacture of moulds for the soles of footwear.

It is known to manufacture metallic moulds by means of which the soles of footwear can be injection moulded directly onto lasted uppers. In the traditional production methods it is necessary to machine the mould parts in order that they fit together closely. Such production processes require a considerable amount of time and skill during the machining operations as it is essential that when the machined slab defining the mould bottom is assembled with the parts defining the mould sides, the contour of the parts correspond exactly to avoid gaps which would result in so-called "flashing" during the pouring or injection of the material serving to constitute the sole. It is however almost impossible to obtain a perfect register between the various mould parts by traditional means, with the result that the moulded footwear will require subsequent treatment to remove the flashing.

It is known from United States Patent Specification No. 3840310 to face the mould parts of a mould in which shoe bottom units can be directly moulded onto lasted uppers, with plastics material to improve the seal between the mould parts.

It is an object of the invention to mitigate against or remove the shortcomings of the known arrangement.

It is also an object of the invention to provide a mould for the production of soles for footwear articles which is simple and quick to produce.

To this end, the invention relates to a method of manufacturing a mould bottom member for the injection moulding of soles onto lasted footwear uppers, characterised in that a slab (2) is made in the generally desired shape of the mould bottom member (1), the slab (2) is assembled with side mould parts (8, 9) to define a mould (7) having a cavity surrounding the slab (2), the slab being located with respect to the side mould parts (8, 9) by lateral centering bosses (5) and an end boss (6) formed on the periphery of the slab, a release agent is applied to the internal surfaces of the side mould parts and an elastomer is introduced into the cavity to cover the peripheral face of the slab (2), the arrangement being such that the elastomer becomes secured to the slab (2), but not to the side mould parts (8, 9), to form a seal (12) round the peripheral face of the mould bottom member (1), and wherein the lateral centering bosses are removed from the slab after formation of the peripheral seal (12) to increase the elasticity of the seal (12). The elastomer may be polyurethane.

The invention is also a mould assembly for soles of footwear articles made by the method described above.

The invention is diagrammatically illustrated, by way of example, in the accompanying drawings, in which:

Figure 1 is a perspective view of a rough metallic slab which forms a mould bottom;

Figure 2 is an inverted perspective view of the metallic slab of Figure 1 assembled with a pair of side mould parts;

Figure 3 is a perspective view of the mould bottom member in the finished state.

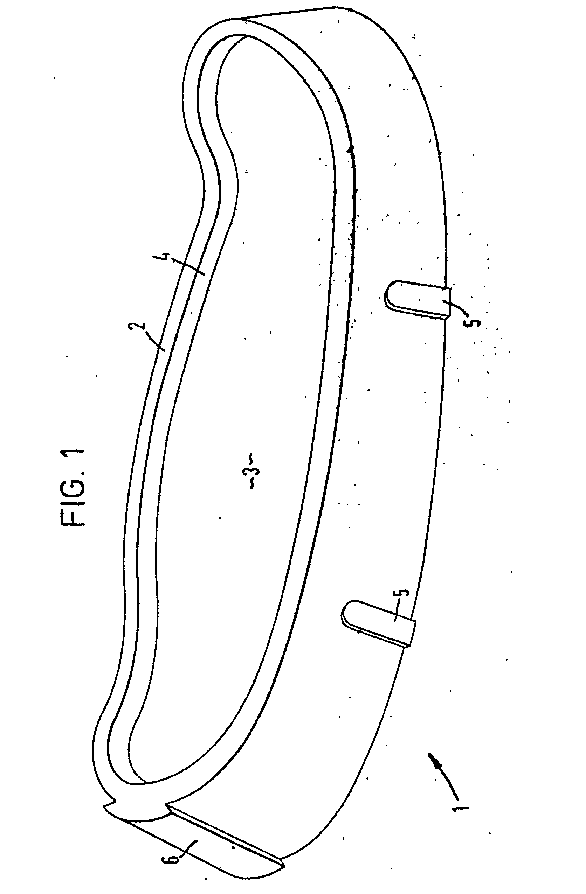

According to Figure 1, a roughly finished mould bottom member 1 generally in the shape of a sole of an article of footwear is constituted by a metallic slab 2, e.g. of aluminium. The upper face 3 of the slab 2 is hollow and is arranged for the reception of the material to form the sole of the article of footwear. The hollow is defined by a peripheral lip 4 round the slab. The slab 2 also incorporates lateral centering bosses 5 and an end boss 6 which together allow the slab to be located relative to a pair of mould sides.

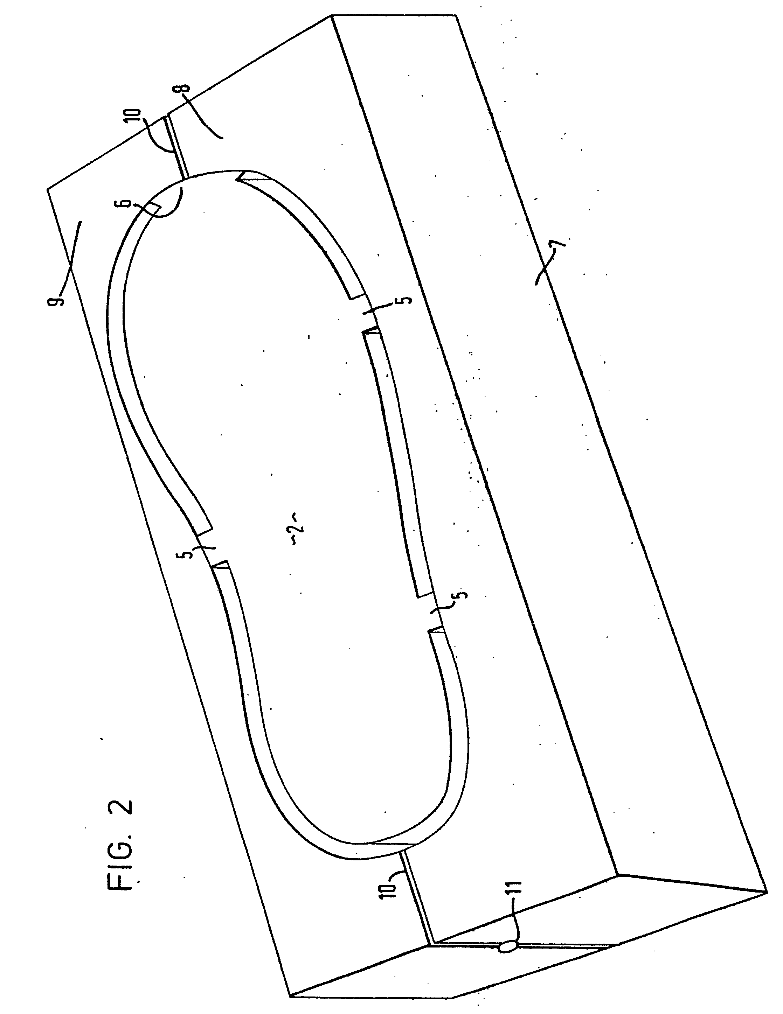

As shown in Figure 2, the slab 2 is inverted and is assembled with a pair of side mould parts 8 and 9 to form a mould 7. The location of the slab 2 relative to the mould parts 8 and 9 is effected with the aid of the lateral bosses 5 and of the end boss 6. The two side mould parts 8 and 9 when assembled and locked together present a joint plane 10. The mould 7 is provided with a duct 11 for the injection or introduction of an elastomer material such as polyurethane into the mould cavity defined between the slab 2 and the side parts 8 and 9.

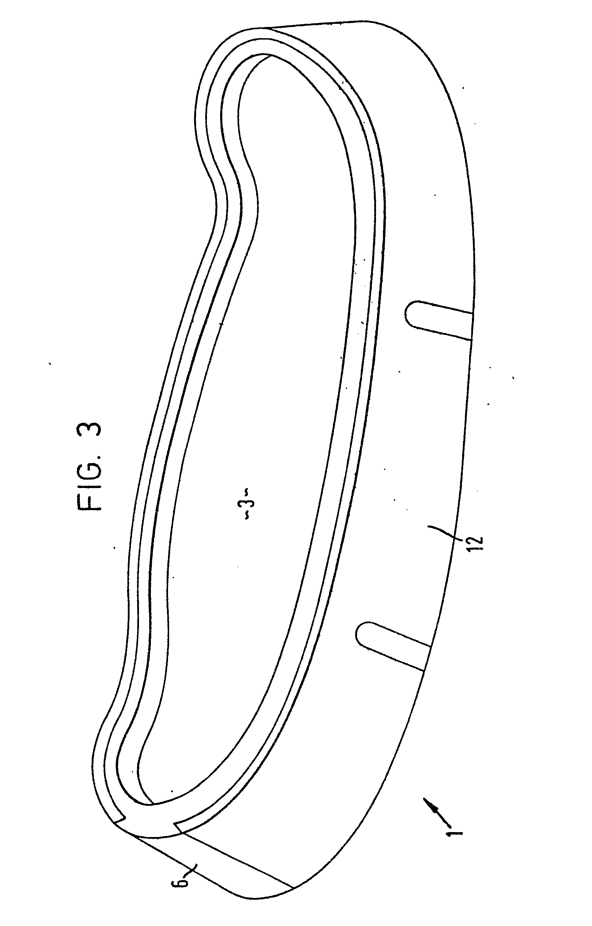

According to Figure 3, the mould bottom member 1 is shown in the finished state, in which it is provided over the full width of its external peripheral surface with a coating 12 of elastomer, which forms a sealing joint when the mould bottom member is assembled with a pair of side mould parts in the production of footwear. The lateral centering bosses 5 have been removed in order to increase the elasticity of the sealing joint 12, but the end boss 6 is retained to allow the slab 2 to maintain a fixed position in the endwise direction, since the injection duct is located in one end to ensure good sealing.

In order to make the mould bottom 1 for a sole of an article of footwear shown in the Figures 1 to 3, a metal slab 2 is first made in the rough form of the sole desired, the slab 2 is assembled with two side mould parts 8 and 9 to form a mould 7; an elastomer such as polyurethane is poured or injected into the mould cavity to cover the external peripheral surfaces of the slab 2 with a coating of polyurethane, this latter constituting the sealing joint 12 of the slab 2.

During the manufacture of the slab as it is shown in Figure 1, lateral bosses 5 and an end boss 6 are formed to allow subsequently the location and the fitting of the slab 2 in the mould 7 (Figure 2), and when the slab 2 has been positioned, a sanding operation and a lubricating operation are carried out with the aid of a solvent on the external surfaces of the slab destined to receive the sealing joint 12. A polyurethane based primer is then applied to this external surface to increase the adhesion of the sealing joint 12 on the metal.

A mould releasing agent is applied to the internal surfaces of the side mould parts 8 and 9 of the mould 7 in order to eliminate any adhesion of the polyurethane to those parts of the mould during the pouring or injection.

A thin film of a material such as polyethylene is placed between the joint planes 10 of the parts 8 and 9 to improve the seal between the parts. This thin film has a thickness of from 8/100 to 1/10 mm.

Polyurethane is poured or injected into the mould 7. This material fills the spaces available between the metallic slab 2 and the internal faces of the mould 7. The exothermic reaction of the polyurethane will reactivate the film of primer so that the polyurethane becomes attached to the slab.

When the cross-linking of the polyurethane is completed, the mould bottom 1 is extracted from the mould 7 and the lateral bosses 5 are removed therefrom in order to improve the elasticity of the sealing joint 12.

The sealing joint 12, which is preferably made in a polyurethane having high mechanical and physical properties, is by way of an example from 3.5 mm to 10 mm thick. Its hardness can vary between 60° and 90° Shore.

As shown in Figure 3, the mould bottom member 1 is ready for use in an injection mould for the production of soles for articles of footwear.

## Claims

1. A method of manufacturing a mould bottom member for the injection moulding of soles onto lasted footwear uppers, characterised in that a slab (2) is made in the generally desired shape of the mould bottom member (1), the slab (2) is assembled with side mould parts (8, 9) to define a mould (7) having a cavity surrounding the slab (2), the slab being located with respect to the side mould parts (8, 9) by lateral centering bosses (5) and an end boss (6) formed on the periphery of the slab, a release agent is applied to the internal surfaces of the side mould parts and an elastomer is introduced into the cavity to cover the peripheral face of the slab (2), the arrangement being such that the elastomer becomes secured to the slab (2), but not to the side mould parts (8, 9), to form a seal (12) round the peripheral face of the mould bottom member (1), and wherein the lateral centering bosses are removed from the slab after formation of the peripheral seal (12) to increase the elasticity of the seal (12).

2. A bottom mould member made by the method of claim 1.

3. A mould assembly for the injection moulding of soles onto lasted footwear uppers, characterised by a bottom mould member (1) as claimed in claim 2.

## Patentansprüche

1. Eine Herstellungsmethode für einen Formunterteil zum Spritzgießen von Sohlen auf Schuhobermaterial auf Leisten, dadurch gekennzeichnet, daß eine Platte (2) entsprechend der allgemeinen Form des Formunterteils (1) gefertigt wird, daß die Platte (2) mit Formseitenteilen (8, 9) zusammengebaut wird, um eine Form (7), mit einem die Platte (2) umgebenden Hohlraum zu erzeugen, wobei das Fixieren der Platte mit Bezug auf die Formseitenteile (8, 9) durch seitliche Zentrieransätze (5) und einen am Umfang der Platte angeformten Endansatz (6) erfolgt, daß die Innenflächen der Formseitenteile mit einem Trennmittel bestrichen werden und ein Elastomer in den Hohlraum eingeführt wird, um die Umfangsfläche der Platte (2) zu bedecken, wobei das Elastomer an der Platte (2) jedoch nicht an den Formseitenteilen (8, 9) befestigt wird, um eine Dichtung (12) an der Umfangsfläche des Formunterteils (1) zu bilden, und daß die seitlichen Zentrieransätze nach Bildung der Umfangsdichtung (12) von der Platte entfernt werden, um die Flexibilität der Dichtung (12) zu erhöhen.

2. Ein Formunterteil, welcher nach der Methode gemäß Anspruch 1 gefertigt wird.

3. Eine Form zum Spritzgießen von Sohlen auf Schuhobermaterial auf Leisten, gekennzeichnet durch einen Formunterteil (1) gemäß Anspruch 2.

## Revendications

1. Procédé de fabrication d'un élément de fond de moule pour le moulage par injection de semelles sur des empeignes de chaussures montées sur des formes, procédé caractérisé en ce qu'il consiste à donner à une plaque (2) la forme générale voulue de l'élément de fond de moule (1), la plaque (2) étant assemblée avec les parties de moule latérales (8, 9) pour définir un moule (7) présentant une cavité entourant la plaque (2), cette plaque se positionnant correctement par rapport aux parties de moule latérales (8, 9) grâce à des bossages de centrage latéraux (5) et à un bossage d'extrémité (6) formé sur le pourtour de la plaque, un agent de démoulage étant appliqué sur les surface intérieures des parties de moule latérales et un élastomère étant introduit dans la cavité de manière à recouvrir la face périphérique de la plaque (2), la disposition étant telle que l'élastomère se fixe à la plaque (2) mais non aux parties de moule latérales (8, 9), de manière à former un joint d'étanchéité (12) autour de la face périphérique de l'élément de fond de moule (1), les bossages de centrage latéraux étant retirés de la plaque après formation du joint d'étanchéité périphérique (12) pour augmenter l'élasticité du joint (12).

2. Elément de fond de moule caractérisé en ce qu'il est obtenu par le procédé selon la revendication 1.

3. Ensemble de moule pour le moulage par injection de semelles sur des empeignes de chaussures montées sur des formes, ensemble de moule caractérisé en ce qu'il utilise un élément de fond de moule (1) selon la revendication 2.

FIG. 1

1

FIG. 2

00 18 714

FIG. 3